# EUROPEAN PATENT SPECIFICATION

(11) **EP 3 543 835 B1**
(45) Date of publication and mention of the grant of the patent: **15.12.2021**
(21) Application number: 19174103.2
(22) Date of filing: 05.06.2012
(51) Int. Cl.: G06F 3/048, G06F 3/042, G06F 3/043, G06F 3/0482, G06F 3/0488

(54) **DISPLAY DEVICE WITH TOUCH CONTROL FEATURE**
ANZEIGEVORRICHTUNG MIT BERÜHRUNGSSTEUERUNGSFUNKTION
DISPOSITIF D'AFFICHAGE AVEC CARACTÉRISTIQUE DE COMMANDE TACTILE

(30) Priority: 28.06.2011 TR 201106373
(43) Date of publication of application: 25.09.2019
(62) Divisional of application: 12170879.6
(73) Proprietor: Vestel Elektronik Sanayi ve Ticaret A.S., 45030 Manisa (TR)
(72) Inventor: CESMECI, Mete, 35410 Izmir (TR); TUZUN, Levent, 35410 Izmir (TR)
(74) Representative: Grünecker Patent- und Rechtsanwälte PartG mbB

(56) References cited:
- WO-A2-02/07072
- DE-A1- 4 121 180
- US-A1- 2003 013 496
- US-A1- 2008 297 487
- US-A1- 2011 115 748

## Description

### Technical Field

The present invention is related to display devices with touch control feature.

### Prior Art

Display devices with touch control feature have become very popular among consumer electronic devices since the cost of touch control implementation has decreased thanks to common usage in recent years. The touch control technologies are widely used both in mobile devices (i.e. portable computers, GSM phones) and home appliances such as televisions, multimedia players etc.

The implementation of touch control feature known from the prior art requires usage of some additional conductive and/or dielectric layers on the touch surface. For instance, for a display to be equipped with resistive touch screen, at least two conductive layers are placed as a touch surface onto the display. When the one of the layers is pressed onto the other one, the touch is detected.

However, implementation of additional layers onto display devices particularly requires additional process during the manufacture of the display itself. Hence the implementation of conventional touch screen becomes difficult and costly especially for large displays.

Furthermore, the touch screen layers implemented onto the large displays are easily deformed due to their large sizes, and touch screen loses its the functionality. This is due to the fact that distance between the layers of the touch screen is far too shorter than the total area of the touch screen.

The patent document US2004/0178006A1 discloses a resistive touch screen, comprising a resistive layer and a conductive layer. When the layers are pressed onto each other at a certain point, the position of the point can be detected by measuring the resistivity between the layers. However, such applications are prone to have short life since the layers are deformed within time and may randomly touch each other.

WO 02/07072 A2 relates to a touch panel display system. In particular, emitters and detectors are distributed around the frame of the display screen. An energy emitter such as an infrared emitter emits beams of energy to be channeled across the face of the display screen, and a receiver detects a ray of an energy beam directed towards it. A location of a touch can be calculated through the blocking of energy beams which would, without a user/object touching the screen, be received by a detector. Alternatively, a touch may be detected through the reflection of energy beams from an object touching the screen. Emitters may be activated according to a particular cycle. For instance, each of the emitters may be activated in a relatively rapid sequence so that a single touch by a user will interrupt energy beams emitted by several different emitters, where each of the interrupted energy beams are emitted at different times. Based on information on interrupted energy beams, the location of a user's touch on or in proximity to the display screen is determined.

DE 41 21 180 A1 relates to manual control of an electronic display device. In particular, if a user's hand approaches the screen, fields with operation instructions are displayed at an edge of the screen of the display device. The proximity of the hand is detected, for example, by means of infrared or ultrasonic rays.

US 2011/115748 A1 relates to an infrared touch screen. Transmitters are sequentially activated, and an object is detected as a receiver detects interruption of an infrared beam which should be detected in absence of the object. At each of the four edges, infrared transmitters T and receivers R are placed in an alternating manner. Moreover, transmitter-receiver pairs may be grouped and turned on and off as a group, wherein neighboring transmitter-receiver pairs are placed in different groups.

US 2008/297487 A1 and US 2003/013496 A1 disclose display devices with proximity sensors. According to these documents, if a user becomes proximate to the display devices, sound or light intensity settings of the display devices are adjusted. Therefore, users are prevented from being annoyed due to due to high noise or high backlight intensity. Therefore an improved technology should be used for long life operation on display devices.

### Brief Description of the Invention

The present invention discloses a display device which is defined by the appended independent claims. Additional embodiments are defined by the dependent claims.

### Object of the Invention

The object of the invention is to provide a display device with touch control function.

Another object of the invention is to provide an adjustment method for providing user - comfort while a touch control of a display device is being used.

### Description of the Drawings

**Figure 1** ; is a front view of a display device of the present invention.
**Figure 2****;** is a detailed front view of a display device of the present invention while an obstacle is placed onto the display.
**Figure 3****;** is a detailed front view of a display device of the present invention with the touch areas.
**Figure 4****;** is a block diagram of the touch control circuitry of the present invention.

The reference numbers as used in figures may possess the following meanings;

| | |
|---|---|
| Display device | (D) |
| Touch area | (T) |
| Frame | (F) |
| First edge | (F1 ) |
| Second edge | (F2) |
| Screen | (S) |
| Transmitter | (1) |
| Receiver | (2) |
| Scanning means | (3) |
| Adjusting means | (4) |

### Description of the Invention

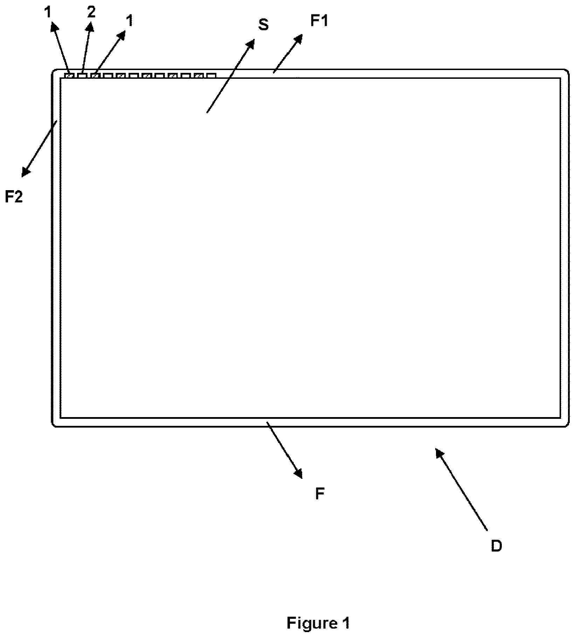

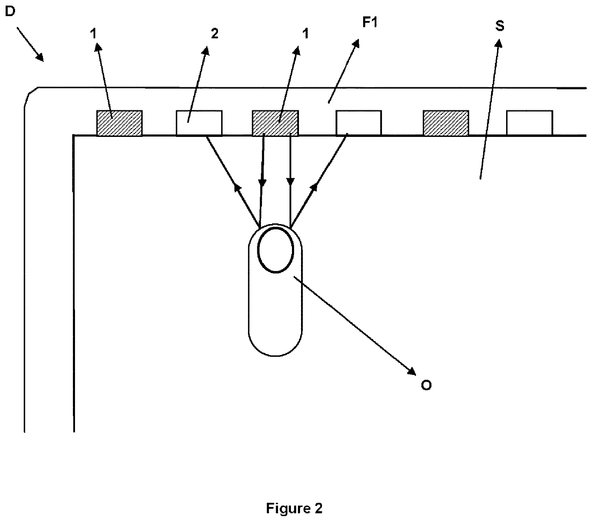

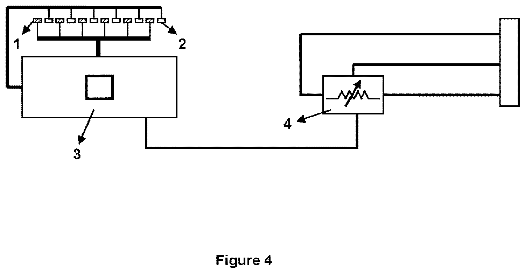

An exemplary illustration of the display device (D) of the present invention is given in figure 1. The display device (D) comprises a frame (F) into which the screen (S) of the device (D) is fitted. Said frame (F) can be the frame of a television or frame of a projection screen. At least two transmitters (1) (infrared or ultrasonic transmitters), which generate infrared light beam or ultrasonic signal beam, are placed along at least a first edge (F1) (either horizontal edge or vertical edge) of the frame. At least one receiver (2) is placed next to said transmitters (1) on the same edge (F1) wherein preferably one receiver (2) is placed between two transmitters (1). Said transmitters (1) are separated into two groups, wherein first, third, fifth (i.e. odd numbered) transmitters (1) are in the first group and second, fourth, sixth (i.e. even numbered) transmitters are in the second group. Said transmitters (1) or group of transmitters (1) are activated sequentially, in other words only first group or second group of transmitters (1) are activated at a time. Said receivers (2) detect the beams originating from the transmitters (1) if the beam is reflected from an obstacle (0), as shown in figure 2. Said display device (D) further comprises at least one scanning means (3), as shown in figure 4. Said scanning means (3) sequentially activates the transmitters (1), detects a sense signal level of receivers (2), activates an on screen menu which is used for adjustment of display parameters when the obstacle (O) becomes proximate to the screen (S) and which detects the position of the obstacle (O) according to the detected sense signal level of the receiver (2) when the obstacle (O) is in contact with the screen (S)

The infrared light beam or ultrasonic signal beam, which is generated by one transmitter (1), radiates towards different directions in a conical path. Thus, the presence of the obstacle (O) can be detected by the receiver (2) when the obstacle (O) is proximate to or in contact with the screen (S). When the obstacle (O) falls into the beam angle of one of the transmitter (1), beams coming from the transmitter (1) is reflected from obstacle (O) and sent to at least one of the receivers (2). According to the distance between the obstacle (O) and the screen (S), intensity of the beams reflected to the receiver (2) varies. Thus, distance between the obstacle (O) and the screen (S) can be measured according to a sense signal level detected on the receiver (2). If said distance is less than a predetermined threshold value, it is interpreted that the obstacle (O) is proximate to the screen (S). Said threshold value can be set during the manufacturing of the display device (D) or can be adjusted by the user.

When an obstacle (O) (i.e. user's finger, a pen or any other passive controller) becomes proximate to the screen (S), the beam generated by the transmitter (1) is reflected from the obstacle (O) and sent to the receiver (2). Thus, presence of the obstacle (O) is detected. When said obstacle (O) is placed onto the screen (S) (i.e. user touches the screen (S) with the obstacle (0)), the beam of active transmitter (1 ) is reflected to the receiver (2). In accordance with activated transmitter (1), intensity of beams reflected to the receivers (2) change. In order to obtain precise position information, sense signal levels of the receiver (2) in response to beams coming from at least two transmitters (1) are evaluated. Alternatively, sense signal levels of the receivers (2) in response to beams coming from one transmitter (1) and reflected to at least two receivers (2) are evaluated. According to position of the obstacle (0), sense signal level reflected to the receivers (2) changes. Thus, position of the obstacle (O) is detected according to the sense signal level measured from at least one receiver (2). When the obstacle (O) is removed away from the screen (S), since no beam will be reflected to the receiver (2), the absence of beam can be interpreted as non-use of touch control of the display device (D). Multiple transmitters (1) and receivers (2) can be placed along a single edge (F1) of the frame (F) to cover a desired portion of the screen (S). By using such touch detection system, display device (D) no more needs control buttons on the frame to control the device (D). According to the present invention, thickness of the frame (F) of the display device (D) is reduced since the transmitter (1) and receiver (2) set, which is placed along only one edge (F1 ) of the frame, does not require much space and no control buttons are needed on the frame (F). Thus, with a thinner frame (F), display device (D) of the present invention satisfies aesthetical needs of the users.

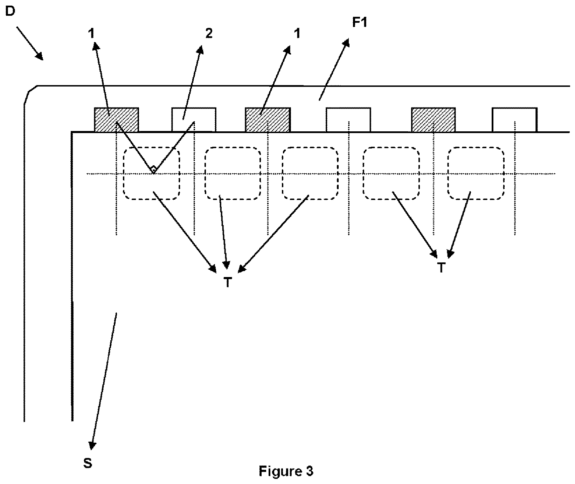

In a preferred embodiment of the present invention, as shown in figure 3, several touch areas (T) are arranged. In order to improve the sensing quality of the touch areas (T) (i.e. sensing the touch areas (T) more accurately), the angle between two hypothetical lines, which come from the center of one of said touch area (T) and go to the center of two neighbouring transmitter (1) and receiver (2), is preferably set to 90°. With this configuration, crosstalk of the touch areas (T) is reduced to minimum when activated transmitter is changed. By this configuration, six different touch areas (T) can be generated using four transmitters (1 ) and three receivers (2). These touch areas (T) can be used to activate different control parameters, such as increasing/decreasing the contrast, brightness or sound parameters of the device (D) or changing the channel.

In a preferred embodiment of the present invention, another set of transmitters (1) and receivers (2) (i.e. at least two transmitters (1) and at least one receiver (2)) are also placed along a second edge (F2) of the frame. Said second edge (F2) may be a neighbouring edge of the first edge (F1). By placing said transmitter (1) and receiver (2) set to a second edge (F2), position of an obstacle (O) can be detected by both transmitter (1) and receiver (2) sets placed along the two edges (F1, F2) of the frame (F). Thus, position of the obstacle (O) is detected more accurately and touch control of the display device (D) becomes more sensitive.

Figure 4 illustrates a block diagram of the touch control circuit of the display device (D) of the present invention. The circuit comprises at least one scanning means (3), which activates transmitters (1) sequentially, keeps receivers (2) at on state, detects a sense signal of the receiver (2), activates an on screen menu when the presence of an obstacle (O) which is become proximate to the screen (S), is detected by at least one receiver (2) and detects the position of the obstacle (O) when the obstacle (O) is placed on the screen (S). Said scanning means (3) is at least one controller, preferably at least one microprocessor. Scanning means (3) can be the main processor of the display device or at least one additional processor in the display device (D) other than said main processor. Consequently, the area covered by the transmitter (1) beams is scanned. Scanning means may further comprise means for evaluating sense signals of the receivers (2). Since the obstacle (O) may be placed in a detection region of multiple receivers (2), the exact position of the obstacle (O) can be calculated evaluating the information of at least two positions received from the receivers (2). Hence a plurality of positions can be detected by a reduced number of receivers (2).

According to the invention, the circuit comprises at least one adjusting means (4), which decreases the intensity of a backlight (not shown in figures) of the screen (S) when an obstacle (O) is detected near the screen (S) or on the screen (S) by the scanning means (3). Since the user is very close to the device (D) during usage of the touch control feature of the display device (D), nominal backlight intensity values may be too high and disturb user.

Therefore, by decreasing the light intensity, user - comfort is provided while the touch control feature of the display device (D) is being used. Furthermore, if the display device (D) comprises an audio output means (i.e. a speaker), the display device (D) comprises, according to the invention, adjusting means (3) which decreases the volume level of the audio output means. Hence aural comfort of the user is provided while the touch control of the display device (D) is being used. The display device (D) may further comprise means for resetting the audio and intensity of backlight level when the audio and intensity of backlight level that are previously decreased are being adjusted manually. Hence the user may correctly adjust, for instance, brightness of the screen (S) using the touch control of the display device (D).

The present invention also comprises an adjustment method for display device (D) with a touch control feature, which comprises the steps of detecting the presence of an obstacle (O) which becomes proximate to the screen (S) of the device (D), activating an on screen menu when the obstacle (O) becomes proximate to the screen (S), detecting the position of the obstacle (O) if the obstacle (O) is put on the screen and performing the necessary action in accordance with detected position of the obstacle (0).

The method may further comprise the steps of;
- detecting the presence of an obstacle (O) which becomes proximate to the screen (S) of the device (D),
- if the obstacle (O) is present, saving a current value of at least one adjustment and decreasing at least one adjustment parameter of the display device (D), in order to provide user - comfort when the touch control is being used,
- if the user is adjusting a display parameter which is decreased by the device (D) to provide user - comfort, increasing the parameter to the saved setting.

The method is meant to provide user- comfort while the touch control is being used. Hence, the backlight intensity and/or volume level of the device is decreased when the user is making some adjustments using the touch control. However, if the user intends to make a backlight and/or volume adjustment, the original values of the adjustments are restored to enable the user to make adjustments accordingly.

Within the display device (D) of the present invention, durable and long-life functional touch control is obtained without changing the screen (S) of the display device (D). Furthermore, the user - comfort is achieved while the user is using the touch control of the device (D) and aesthetical needs of the users are achieved by reducing the thickness of the frame (F) of the display device (D).

## Claims

1. A display device (D) which comprises at least one screen (S), a frame (F) into which the screen (S) is fitted, the display device (D) comprising;
- at least two transmitters (1) configured to generate infrared light beams or ultrasonic signal beams, located on one edge (F1) of the frame (F);
- at least one receiver (2), configured to detect the beams coming from at least one transmitter (1) and reflected from an obstacle (O) and the at least one receiver (2) is placed between two transmitters (1) on the same edge (F1) of the frame (F);
wherein said display device (D) further comprises at least one scanning means (3) which is configured to sequentially activate said transmitters (1) such that transmitters (1) located next to same receiver (2) are not activated simultaneously, to detect a sense signal level of receivers (2), and to detect the position of the obstacle (O) when the obstacle (O) is in contact with the screen (S) according to the detected sense signal level of the receiver (2),
**characterized in that**
the at least one scanning means (3) is configured to activate an on screen menu which is used for adjustment of control parameters, when the obstacle (O) becomes proximate to the screen (S),
wherein the on screen menu comprises a plurality of touch areas (T), wherein a touch area from among the plurality of touch areas is centered in an origin of two lines going to the center of one of the at least two transmitters and one of the at least one receivers neighboring said one transmitter, the angle between the two lines being set to 90°, the touch areas being substantially rectangular and non-overlapping and the respective centers of the plurality of touch areas being each at an equal distance to the one edge of the frame; and
comprising at least one adjusting means (4) configured to decrease at least one of the intensity of a backlight of the screen (S) and a volume level of an audio output means comprised by the display device (D) when an obstacle (O) is detected by the scanning means (3).

2. The display device (D) according to claim 1 wherein said scanning means (3) comprises at least one microprocessor.

3. The display device (D) according to claim 1 wherein said scanning means (3) comprises a main processor of the display device (D).

4. The display device (D) according to claim 1 wherein it further comprises at least two transmitters (1) and at least one receiver (2) which are placed along a second edge (F2) of the frame.

5. An adjustment method for a display device (D), which comprises at least two transmitters (1) and two receivers (2) in at least one edge (F1) of one frame, wherein one receiver (1) is placed between two transmitters (1), the method comprising the steps of;
sequentially activating said transmitters (1), such that transmitters (1) located next to same receiver (2) are not activated simultaneously; measuring a sense signal level of the receivers (2); detecting presence of an obstacle (O) which becomes proximate to a screen (S) of the device (D) and reflects the beams coming from activated transmitter (1) to at least one receiver (2);
detecting the position of the obstacle (O) according to the measured sense signal level of the receivers (2); if the obstacle (O) is in contact with the screen;
**characterized by**
activating an on screen menu when the obstacle (O) becomes proximate to the screen (S);
adjusting the control parameters of a device in accordance with detected position of the obstacle (O), and
decreasing at least one of the intensity of a backlight of the screen (S)and a volume level of an audio output means comprised by the display device (D) when an obstacle (O) is detected;
wherein the on screen menu comprises a plurality of touch areas (T), wherein a touch area from among the plurality of touch areas is centered in an origin of two lines going to the center of one of the at least two transmitters and one of the at least one receivers neighboring said one transmitter, the angle between the two lines being set to 90°, the touch areas being substantially rectangular and non-overlapping and the respective centers of the plurality of touch areas being each at an equal distance to the one edge of the frame.

6. The adjustment method according to claim 5, wherein it further comprises the steps of;
if the obstacle (O) is present, saving a current value of at least one adjustment; decreasing said adjustment parameter of the display device (D);
if a user is adjusting a display parameter which is decreased by the device (D), increasing the adjustment to the saved setting.

## Patentansprüche

1. Anzeigevorrichtung (D), die mindestens einen Bildschirm (S), einen Rahmen (F), in den der Bildschirm (S) eingepasst ist, umfasst, wobei die Anzeigevorrichtung (D) umfasst:
- mindestens zwei Sender (1), konfiguriert, um Infrarot-Lichtstrahlen oder Ultraschall-Signalstrahlen zu erzeugen, angeordnet auf einer Kante (F1) des Rahmens (F);
- mindestens einen Empfänger (2), konfiguriert, um die Strahlen, die von mindestens einem Sender (1) stammen, und von einem Hindernis (O) reflektiert werden, zu ermitteln, wobei der mindestens eine Empfänger (2) zwischen zwei Sendern (1) auf der gleichen Kante (F1) des Rahmens (F) angeordnet ist, wobei die Anzeigevorrichtung (D) des Weiteren mindestens eine Scaneinrichtung (3) umfasst, die konfiguriert ist, um die Sender (1) nacheinander so zu aktivieren, dass die Sender (1), die neben dem gleichen Empfänger (2) angeordnet sind, nicht gleichzeitig aktiviert werden, um einen Erfassungssignalpegel der Empfänger (2) zu ermitteln, und die Position des Hindernisses (O) entsprechend dem ermittelten Erfassungssignalpegel des Empfängers (2) zu ermitteln, wenn das Hindernis (O) in Kontakt mit dem Bildschirm (S) steht,
**dadurch gekennzeichnet, dass**
die mindestens eine Scaneinrichtung (3) konfiguriert ist, um ein Bildschirmmenü zu aktivieren, das zur Einstellung von Steuerparametern verwendet wird, wenn das Hindernis (O) in die Nähe des Bildschirms (S) gelangt,
wobei das Bildschirmmenü eine Vielzahl an Berührungsflächen (T) umfasst, wobei eine Berührungsfläche aus der Vielzahl an Berührungsflächen in einem Ursprung zweier Linien zentriert ist, die zum Zentrum von einem der mindestens zwei Sender und einem der mindestens einen Empfänger, der dem einen Sender benachbart ist, führen, wobei der Winkel zwischen den zwei Linien auf 90° eingestellt ist, die Berührungsflächen im wesentlichen rechteckig sind und sich nicht überlappen und die entsprechenden Zentren der Vielzahl an Berührungsflächen sich jeweils in gleichem Abstand zu der einen Kante des Rahmens befinden; und
mindestens eine Einstelleinrichtung (4) umfasst, konfiguriert, um die Intensität der Hintergrundbeleuchtung des Bildschirms (S) und/oder den Lautstärkepegel einer Audioausgabeeinrichtung, die in der Anzeigevorrichtung (D) enthalten sind, zu verringern, wenn ein Hindernis (O) durch die Scaneinrichtung (3) ermittelt wird.

2. Anzeigevorrichtung (D) nach Anspruch 1, wobei die Scaneinrichtung (3) mindestens einen Mikroprozessor umfasst.

3. Anzeigevorrichtung (D) nach Anspruch 1, wobei die Scaneinrichtung (3) einen Hauptprozessor der Anzeigevorrichtung (D) umfasst.

4. Anzeigevorrichtung (D) nach Anspruch 1, die des Weiteren mindestens zwei Sender (1) und mindestens einen Empfänger (2) umfasst, die entlang einer zweiten Kante (F2) des Rahmens angeordnet sind.

5. Einstellverfahren für eine Anzeigevorrichtung (D), die mindestens zwei Sender (1) und zwei Empfänger (2) in mindestens einer Kante (F1) von einem Rahmen umfasst, wobei ein Empfänger (1) zwischen zwei Sendern (1) angeordnet ist, wobei das Verfahren die nachstehenden Schritte umfasst:
aufeinanderfolgendes Aktivieren der Sender (1), so dass neben dem gleichen Empfänger (2) gelegene Sender (1) nicht gleichzeitig aktiviert werden; Messen eines Erfassungssignalpegels der Empfänger (2); Ermitteln der Anwesenheit eines Hindernisses (O), das in die Nähe des Bildschirms (S) der Vorrichtung (D) gelangt und die Strahlen, die vom aktivierten Sender (1) stammen, zu mindestens einem Empfänger (2) reflektiert;
Ermitteln der Position des Hindernisses (O) entsprechend dem gemessenen Erfassungssignalpegel der Empfänger (2), wenn das Hindernis (O) in Kontakt mit dem Bildschirm steht;
**gekennzeichnet durch**
Aktivieren eines Bildschirmmenüs, wenn das Hindernis (O) in die Nähe des Bildschirms (S) gelangt;
Einstellen der Steuerparameter einer Vorrichtung in Übereinstimmung mit der ermittelten Position des Hindernisses (O), und
Verringern der Intensität der Hintergrundbeleuchtung des Bildschirms (S) und/oder des Lautstärkepegels einer Audioausgabeeinrichtung, die in der Anzeigevorrichtung (D) enthalten sind, wenn ein Hindernis (O) ermittelt wird;
wobei das Bildschirmmenü eine Vielzahl an Berührungsflächen (T) umfasst, wobei eine Berührungsfläche aus der Vielzahl an Berührungsflächen in einem Ursprung zweier Linien zentriert ist, die zum Zentrum von einem der mindestens zwei Sender und einem der mindestens einen Empfänger, der dem einen Sender benachbart ist, führen, wobei der Winkel zwischen den zwei Linien auf 90° eingestellt ist, die Berührungsflächen im wesentlichen rechteckig sind und sich nicht überlappen und die entsprechenden Zentren der Vielzahl an Berührungsflächen sich jeweils in gleichem Abstand zu der einen Kante des Rahmens befinden.

6. Einstellverfahren nach Anspruch 5, das des Weiteren die nachstehenden Schritte umfasst:
wenn das Hindernis (O) vorhanden ist, Speichern eines Stromwerts von mindestens einer Einstellung;
Verringern des Einstellparameters der Anzeigevorrichtung (D);
wenn ein Benutzer einen Anzeigeparameter einstellt, der durch die Vorrichtung (D) verringert wird, Vergrößern der Einstellung auf den gespeicherten Einstellungswert.

## Revendications

1. Dispositif d'affichage (D) qui comprend au moins un écran (S), une structure (F) dans laquelle l'écran (S) est installé, le dispositif d'affichage (D) comprenant :
- au moins deux émetteurs (1) configurés pour générer des faisceaux de lumière infrarouge ou des faisceaux de signaux à ultrasons, installés sur une arête (F1) de la structure (F) ;
- au moins un récepteur (2), configuré pour détecter les faisceaux provenant d'au moins un émetteur (1) et réfléchis depuis un obstacle (O) et l'au moins un récepteur (2) est placé entre deux émetteurs (1) sur la même arête (F1) de la structure (F) ;
dans lequel ledit dispositif d'affichage (D) comprend en outre au moins un moyen d'analyse (3) qui est configuré pour activer séquentiellement lesdits émetteurs (1) de sorte que des émetteurs (1) installés à côté d'un même récepteur (2) ne sont pas activés simultanément, pour détecter un niveau de signal de détection de récepteurs (2), et pour détecter la position de l'obstacle (O) lorsque l'obstacle (O) est en contact avec l'écran (S) selon le niveau de signal de détection détecté du récepteur (2),
**caractérisé en ce que**
l'au moins un moyen d'analyse (3) est configuré pour activer un menu à l'écran qui est utilisé pour un réglage de paramètres de contrôle, lorsque l'obstacle (O) devient proche de l'écran (S),
dans lequel le menu à l'écran comprend une pluralité de zones tactiles (T), dans lequel
une zone tactile parmi la pluralité de zones tactiles est centrée sur une origine de deux lignes orientées vers le centre d'un des au moins deux émetteurs et d'un de l'au moins un récepteur voisin dudit un émetteur, l'angle entre les deux lignes étant fixé à 90 °, les zones tactiles étant substantiellement rectangulaires et non chevauchantes et les centres respectifs de la pluralité de zones tactiles étant chacun à une distance égale de l'une arête de la structure ; et
comprenant au moins un moyen d'ajustement (4) configuré pour diminuer au moins un de l'intensité d'un rétroéclairage de l'écran (S) et d'un niveau de volume d'un moyen de sortie audio que comprend le dispositif d'affichage (D) lorsqu'un obstacle (O) est détecté par le moyen d'analyse (3).

2. Le dispositif d'affichage (D) selon la revendication 1 dans lequel ledit moyen d'analyse (3) comprend au moins un microprocesseur.

3. Le dispositif d'affichage (D) selon la revendication 1 dans lequel ledit moyen d'analyse (3) comprend un processeur principal du dispositif d'affichage (D).

4. Le dispositif d'affichage (D) selon la revendication 1 dans lequel il comprend en outre au moins deux émetteurs (1) et au moins un récepteur (2) qui sont placés le long d'une deuxième arête (F2) de la structure.

5. Procédé de réglage d'un dispositif d'affichage (D), qui comprend au moins deux émetteurs (1) et deux récepteurs (2) dans au moins une arête (F1) d'une même structure, dans lequel un récepteur (1) est placé entre deux émetteurs (1), le procédé comprenant les étapes de :
activation séquentielle desdits émetteurs (1), de sorte que des émetteurs (1) installés à côté d'un même récepteur (2) ne sont pas activés simultanément ; mesure d'un niveau de signal de détection des récepteurs (2) ; détection d'une présence d'un obstacle (O) qui devient proche d'un écran (S) du dispositif (D) et reflète les faisceaux provenant d'un émetteur activé (1) vers au moins un récepteur (2) ;
détection de la position de l'obstacle (O) en fonction du niveau de signal de détection mesuré des récepteurs (2) ; si l'obstacle (O) est en contact avec l'écran ;
**caractérisé par**
activation d'un menu à l'écran lorsque l'obstacle (O) devient proche de l'écran (S) ;
réglage des paramètres de contrôle d'un dispositif en fonction d'une position détectée de l'obstacle (O), et
diminution d'au moins un de l'intensité d'un rétroéclairage de l'écran (S) et d'un niveau de volume d'un moyen de sortie audio que comprend le dispositif d'affichage (D) lorsqu'un obstacle (O) est détecté ;
dans lequel le menu à l'écran comprend une pluralité de zones tactiles (T),
dans lequel une zone tactile parmi la pluralité de zones tactiles est centrée sur une origine de deux lignes orientées vers le centre d'un des au moins deux émetteurs et d'un de l'au moins un récepteur voisin dudit un émetteur, l'angle entre les deux lignes étant fixé à 90 °, les zones tactiles étant substantiellement rectangulaires et non chevauchantes et les centres respectifs de la pluralité de zones tactiles étant chacun à une distance égale de l'une arête de la structure.

6. Le procédé de réglage selon la revendication 5, dans lequel il comprend en outre les étapes de :
si l'obstacle est présent (0), enregistrement d'une valeur courante d'au moins un réglage ;
diminution dudit paramètre de réglage du dispositif d'affichage (D) ;
si un utilisateur règle un paramètre d'affichage qui est diminué par le dispositif (D), augmentation du réglage vers le paramètre enregistré.
